# EUROPEAN PATENT APPLICATION

(11) **EP 4 786 116 A1**
(43) Date of publication of application: **05.08.2026**
(21) Application number: 26151549.8
(22) Date of filing: 13.01.2026
(51) Int. Cl.: B25J 9/16, G05B 19/418

(54) **ROBOT SYSTEM, WORKPIECE MANAGEMENT SYSTEM, ROBOT CONTROL METHOD, AND WORKPIECE MANAGEMENT PROGRAM**

(30) Priority: 31.01.2025 JP 2025015440
(71) Applicant: Kabushiki Kaisha Yaskawa Denki, Kitakyushu-shi, Fukuoka 806-0004 (JP)
(72) Inventor: KABUTAN, Ryo, Fukuoka, 806-0004 (JP); SUZUKI, Ryohei, Tokyo, 103-0012 (JP); KADOYA, Takuya, Fukuoka, 806-0004 (JP)
(74) Representative: Viering, Jentschura & Partner mbB Patent- und Rechtsanwälte

(57) **Abstract**

[Problem] To efficiently execute multi-picking.

[Solution] A robot system includes: a robot that executes a picking process for successively picking two or more workpieces moving along a conveying surface; a grouping unit that generates m groups (where m ≥ 1) each consisting of n workpieces (where n > 1) from a plurality of workpieces moving along the conveying surface; an order determination unit that determines, for at least one group among the m groups, a picking order that is an order for picking the n workpieces belonging to the group, using an optimization technique; and a robot control unit that controls the picking process of the robot so as to successively pick the n workpieces belonging to the group from the conveying surface according to the picking order and thereafter place the n workpieces at a predetermined placement position, for the at least one group.

## Description

### TECHNICAL FIELD

An aspect of the present disclosure relates to a robot system, a workpiece management system, a robot control method, and a workpiece management program.

### BACKGROUND

A technique for picking workpieces by a device such as a robot is known. For example, Japanese Patent No. 6528121 and Japanese Patent No. 6528122 describe a component picking device used in a component mounting field for mounting components on a substrate. This device includes a component supply unit that supplies a plurality of components to be picked in irregular postures, a camera that images the plurality of components supplied in irregular postures, a component detection unit that detects a plurality of pickable components based on the captured image, a component selection unit that selects a plurality of components to be picked from the plurality of pickable components, and a component conveying unit that holds and picks the plurality of components to be picked by a plurality of component holding units, respectively. The component selection unit described in Japanese Patent No. 6528121 selects the plurality of components to be picked based on a total movement time of the component conveying unit in a component picking operation for sequentially picking the plurality of components to be picked by the plurality of component holding units. The component selection unit described in Japanese Patent No. 6528122 selects the plurality of components to be picked based on a total movement distance of the component conveying unit in a component picking operation for sequentially picking the plurality of components to be picked by the plurality of component holding units.

Japanese Patent No. 6553568 describes a conveying device that picks items being conveyed. This conveying device includes an item detection unit that detects positions and postures of a plurality of items arranged in a predetermined area on a conveyor, a combination calculation unit that calculates combinations of orders in which a hand of a robot grips two or more items among the plurality of items and stores them in a container, an index calculation unit that calculates an index based on a distance between items gripped by the hand and a rotation amount based on the positions and postures of the plurality of items for each combination, and a robot control unit that determines an order of items to be gripped by the hand of the robot based on the index and grips the items and stores them in the container according to that order.

### SUMMARY

### Problem to be Solved by the Invention

A mechanism for efficiently executing multi-picking is desired.

### Means for Solving the Problem

A robot system according to an aspect of the present disclosure includes: a robot configured to execute a picking process for successively picking two or more workpieces moving along a conveying surface; a grouping unit configured to generate m groups (where m ≥ 1) each consisting of n workpieces (where n > 1) from a plurality of workpieces moving along the conveying surface; an order determination unit configured to determine, for at least one group among the m groups, a picking order that is an order for picking the n workpieces belonging to the group, using an optimization technique; and a robot control unit configured to control the picking process of the robot so as to successively pick the n workpieces belonging to the group from the conveying surface according to the picking order and thereafter place the n workpieces at a predetermined placement position, for the at least one group.

A workpiece management system according to an aspect of the present disclosure is a system for a picking process for successively picking two or more workpieces moving along a conveying surface. The workpiece management system includes: a grouping unit configured to generate m groups (where m ≥ 1) each consisting of n workpieces (where n > 1) from a plurality of workpieces moving along the conveying surface; an order determination unit configured to determine, for at least one group among the m groups, a picking order that is an order for picking the n workpieces belonging to the group by a robot, using an optimization technique; and an output unit configured to output the picking order for the at least one group.

A robot control method according to an aspect of the present disclosure is executed by a robot control system including at least one processor configured to control a robot that executes a picking process for successively picking two or more workpieces moving along a conveying surface. The robot control method includes: generating m groups (where m ≥ 1) each consisting of n workpieces (where n > 1) from a plurality of workpieces moving along the conveying surface; determining, for at least one group among the m groups, a picking order that is an order for picking the n workpieces belonging to the group, using an optimization technique; and controlling the picking process of the robot so as to successively pick the n workpieces belonging to the group from the conveying surface according to the picking order and thereafter place the n workpieces at a predetermined placement position, for the at least one group.

A workpiece management program according to an aspect of the present disclosure causes a computer to function as a workpiece management system for a picking process for successively picking two or more workpieces moving along a conveying surface. The workpiece management program causes the computer to execute: generating m groups (where m ≥ 1) each consisting of n workpieces (where n > 1) from a plurality of workpieces moving along the conveying surface; determining, for at least one group among the m groups, a picking order that is an order for picking the n workpieces belonging to the group by a robot, using an optimization technique; and outputting the picking order for the at least one group.

### Effect of the Invention

According to an aspect of the present disclosure, multi-picking may be efficiently executed.

### BRIEF DESCRIPTION OF THE DRAWINGS

FIG. 1 is a diagram showing an example of a configuration of a robot system.
FIG. 2 is a diagram showing an example of a hardware configuration of a robot controller.
FIG. 3 is a flowchart showing an example of a process for adding a workpiece to an array.
FIG. 4 is a flowchart showing an example of a process for picking a workpiece from a conveying surface.
FIG. 5 is a diagram showing an example related to grouping of workpieces.
FIG. 6 is a diagram showing an example of determining a picking order.
FIG. 7 is a diagram showing an example of determining a picking order.
FIG. 8 is a diagram showing an example of a process for newly generating groups.

### DETAILED DESCRIPTION

Hereinafter, various examples in the present disclosure will be described in detail with reference to the accompanying drawings. In the description of the drawings, the same reference numerals are assigned to the same or equivalent elements, and overlapping description is omitted.

### [Overview of System]

A robot system according to the present disclosure is a control system that controls a robot so as to pick one or more workpieces moving along a conveying surface. In the present disclosure, a process for picking a workpiece moving along a conveying surface is also referred to as a "picking process". For example, the robot system causes the robot to execute a pick-and-place operation for moving a workpiece from the conveying surface to another position. The pick-and-place operation is an example of the picking process.

The conveying surface refers to a surface that moves a placed workpiece by being moved in a predetermined direction by a predetermined driving device. In an example, the conveying surface is a surface of a conveyor. For example, the conveying surface may be a belt of a belt conveyor or a surface realized by a set of rollers of a roller conveyor.

In an example, the robot system causes the robot to execute multi-picking for successively picking two or more workpieces moving along the conveying surface and thereafter placing the two or more workpieces at a predetermined placement position. To realize this multi-picking, the robot system generates one or more groups each consisting of two or more workpieces from a plurality of workpieces moving along the conveying surface. One group corresponds to one multi-picking operation. The robot system determines, for at least one group, an order in which the two or more workpieces belonging to the group are to be picked, using an optimization technique. In the present disclosure, the determined order is also referred to as a "picking order". The robot system executes multi-picking for the at least one group for which the picking order has been determined. By grouping workpieces and determining a picking order for each group in this manner, multi-picking may be executed more efficiently.

In an example, the robot system manages information about workpieces on the conveying surface by adding individual workpieces that have moved along the conveying surface to an array one after another. The robot system then generates one or more groups from a plurality of workpieces in the array. The array is a data structure for managing information about a plurality of workpieces moving along the conveying surface. In an example, this array is a one-dimensional array, and the robot system adds a plurality of workpieces to the one-dimensional array in sequence.

### [Configuration of System]

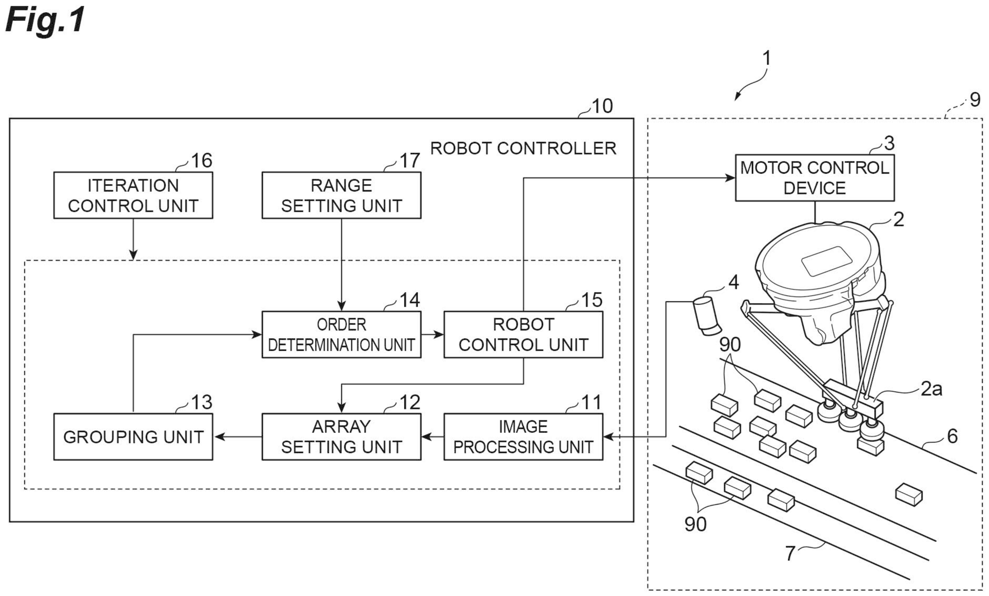

FIG. 1 is a diagram showing a configuration of a robot system 1 according to an example. The robot system 1 includes a robot 2 arranged in a real working space 9, a motor control device 3 that controls a motor of the robot 2, and a robot controller 10 that outputs a control signal to the motor control device 3. The working space 9 further includes a conveyor 6 along which workpieces 90 to be picked by the robot 2 move, a placement area 7 where the workpieces 90 picked from the conveyor 6 are placed, and a camera 4 that images the conveying surface of the conveyor 6. The robot controller 10 is connected to each of the motor control device 3 and the camera 4 via a communication network. The communication network connecting the devices may be a wired network or a wireless network. The communication network may include at least one of the Internet and an intranet. Alternatively, the communication network may be simply realized by one communication cable.

The robot 2 is a device that receives power and performs a predetermined operation in accordance with a purpose to execute useful work. In the robot system 1, the robot 2 executes a picking process (multi-picking) for successively picking two or more workpieces moving along the conveying surface. In an example, the robot 2 includes an arm having a plurality of joints and an end effector 2a attached to a tip of the arm. The joints are examples of driven objects. A joint axis is set for each of the plurality of joints. Some components of the robot 2, such as an arm and a pivot unit, rotate about the joint axis. As a result, the robot 2 is able to freely change the position and posture of the end effector 2a within a predetermined range. In an example, the robot 2 is a vertical articulated robot of a multi-axis serial link type. The robot 2 may be a six-axis vertical articulated robot or a seven-axis vertical articulated robot in which one redundant axis is added to six axes. Alternatively, the robot 2 may be a parallel link robot that operates according to a mechanism called a parallel link. The robot 2 may be a movable robot capable of self-propulsion, for example, a robot supported by an automated guided vehicle (AGV). Alternatively, the robot 2 may be a stationary robot fixed at a predetermined place. Examples of the end effector 2a for multi-picking include a suction end having a plurality of suction pads, a multi-finger hand capable of gripping a workpiece between respective fingers, and a scoop for scooping up a plurality of workpieces. Other types of end effectors may be used as long as a plurality of workpieces may be conveyed at once.

The motor of the robot 2 is a device that generates power for driving a driven object of the robot 2 in response to electric power supplied from the motor control device 3. Individual motors operate individual driven objects, and as a result, the robot 2 uses the end effector 2a to execute a predetermined task on the workpiece 90. The motor may be a rotary motor that rotates the driven object or a linear motor that displaces the driven object along a straight line. The motor may be a synchronous motor or an induction motor. The motor may be a permanent magnet type synchronous motor such as a surface permanent magnet (SPM) motor or an interior permanent magnet (IPM) motor. The motor may be a synchronous motor without a permanent magnet, such as a synchronous reluctance motor. The motor may be a DC motor or an AC motor.

The robot 2 may include at least one sensor that is a device for detecting a response of the robot 2 operated by the electric power from the motor control device 3. The response refers to an output of the robot with respect to a command that is an instruction for controlling the robot. For example, the response indicates information about at least one of an operation and a state of the robot 2. The response may indicate information about at least one of an operation and a state of the motor, for example, at least one of an axis velocity and a magnetic pole position of the motor. In a case where the motor is a rotary type, a rotation angle of the driven object by the motor corresponds to "position", and a rotation velocity of the driven object by the motor corresponds to "velocity". The response may indicate information about at least one of an operation and a state of the driven object, for example, at least one of a position, a velocity, and a force of the driven object. The sensor transmits a response signal indicating the response to the robot controller 10. The response may be a value itself obtained by the sensor or may be represented by a value calculated or processed by a given calculation or algorithm. An example of the sensor is a rotary encoder that outputs a pulse signal having a frequency proportional to an operation velocity of the motor. The rotary encoder is capable of obtaining both the position and velocity of the motor.

The motor control device 3 is a device for causing an output of the motor to follow a control signal (i.e., command) from the robot controller 10. The motor control device 3 generates electric power for driving the motor based on the control signal from the robot controller 10 and supplies the electric power to the motor. The supplied electric power corresponds to a driving force command such as a torque command or a current command. The motor control device 3 may be, for example, an inverter or a servo amplifier. The motor control device 3 may be incorporated into the robot 2. The motor control device 3 may include a sensor that detects a response of the motor control device 3 itself.

The camera 4 is a device that images the conveying surface of the conveyor 6 and is an example of a sensor that monitors the conveying surface. In an example, the camera 4 images the conveying surface and continuously transmits image data to the robot controller 10 while one or more workpieces 90 are moving along the conveyor 6. The image data is, for example, video data constituted by a plurality of frames.

The conveyor 6 is a conveying device that moves a plurality of workpieces 90 in a predetermined direction. The conveying surface of the conveyor 6 has a moving direction that is a direction in which the plurality of workpieces 90 move and a width direction orthogonal to the moving direction. The width of the conveyor 6 is large enough to allow two or more workpieces 90 to move in parallel. On the conveyor 6, the plurality of workpieces 90 move along the conveying surface in a state of being randomly arranged in at least one of the moving direction and the width direction. That is, on the conveying surface of the conveyor 6, positions of the plurality of workpieces 90 are irregular in at least one of the moving direction and the width direction. For example, the plurality of workpieces 90 move along the conveying surface of the conveyor 6 in a manner in which at least one of a position and an orientation of each workpiece 90 is irregular. Part of the plurality of workpieces 90 may move while rotating on the conveyor 6, which is one example of the random arrangement.

In an example, the conveyor 6 forms a path for circulating the workpieces 90. In this example, even if a certain workpiece 90 has not been picked in a picking area, that workpiece 90 returns to the picking area again and may be picked by the robot 2 at that time.

A placement position is set in the placement area 7. The placement position may be represented by an X coordinate and a Y coordinate, or may be represented by an X coordinate, a Y coordinate, and a Z coordinate.

Although FIG. 1 shows one robot 2 and one robot controller 10, the robot system 1 may include a plurality of robots 2 or a plurality of robot controllers 10. One robot controller 10 may be connected to a plurality of robots 2. A plurality of conveyors 6 and a plurality of cameras 4 may exist. In a case where a plurality of placement positions are set, a plurality of placement areas 7 may exist and one or more placement positions may be set in each placement area 7.

The robot controller 10 is a device that generates a command for operating the robot 2 and outputs a control signal based on the command. The robot controller 10 is an example of a robot control system that controls the robot 2 that executes the picking process, and is also an example of a workpiece management system for the picking process. In an example, the robot controller 10 includes, as functional modules, an image processing unit 11, an array setting unit 12, a grouping unit 13, an order determination unit 14, a robot control unit 15, an iteration control unit 16, and a range setting unit 17.

The image processing unit 11 is a functional module that extracts the workpiece 90 from image data received from the camera 4. The array setting unit 12 is a functional module that sets an array indicating one or more workpieces 90 based on the extracted workpiece 90 and a result of robot control. The grouping unit 13 is a functional module that generates m groups each consisting of n workpieces based on the array. Here, n > 1 and m ≥ 1. The order determination unit 14 is a functional module that determines, for at least one of the m groups, a picking order that is an order for picking the n workpieces belonging to the group, using an optimization technique. The robot control unit 15 is a functional module that controls the picking process (multi-picking) of the robot 2 so as to, for the at least one group, successively pick the n workpieces 90 belonging to the group from the conveying surface of the conveyor 6 according to the picking order and thereafter place the n workpieces 90 on the conveying surface of the placement area 7. The iteration control unit 16 is a functional module that causes the robot 2 to repeatedly execute the picking process (multi-picking). The range setting unit 17 is a functional module that sets a pickable range of the robot 2 on the conveying surface as needed. The pickable range refers to a range in which the robot is able to pick a workpiece. The pickable range may also be said to be a range in which the end effector of the robot is able to reach the workpiece. For example, the range setting unit 17 sets a picking range stored in advance in a storage 193 or input by a user. In an example, the pickable range is represented by a combination of a plurality of coordinates located at an outer edge of the range.

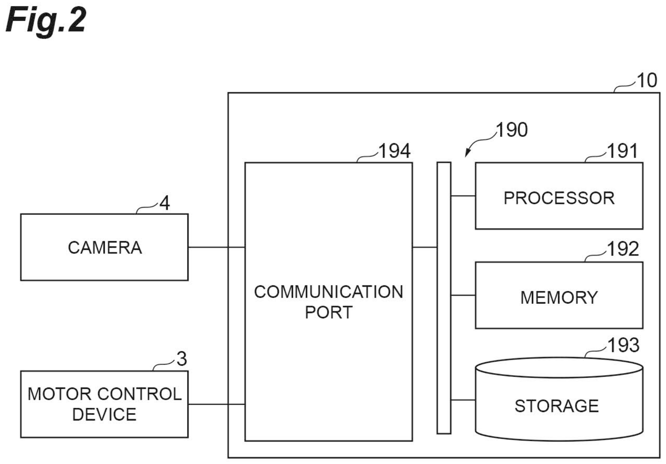

FIG. 2 is a diagram showing an example of a hardware configuration of the robot controller 10. The robot controller 10 includes circuitry 190. In an example, the circuitry 190 includes at least one processor 191, a memory 192, a storage 193, and at least one communication port 194. The storage 193 is a non-volatile storage medium and stores a program for realizing each of the above functional modules. The storage 193 may be configured by, for example, at least one hard disk or nonvolatile memory. The memory 192 temporarily stores a program loaded from the storage 193, a calculation result by the processor 191, and the like. The memory 192 may be configured by, for example, at least one random access memory. The processor 191 executes the program in cooperation with the memory 192 to configure each functional module. The communication port 194 performs data communication with another device according to a command from the processor 191. For example, the robot controller 10 includes one communication port 194 for transmitting and receiving data signals to and from the camera 4 and another communication port 194 for transmitting and receiving data signals to and from the motor control device 3.

Each functional module of the robot controller 10 is realized by loading a robot control program onto the processor 191 or the memory 192 and causing the processor 191 to execute the program. The robot control program includes code for realizing each functional module of the robot controller 10. The processor 191 operates the communication port 194 according to the robot control program and executes reading and writing of data in the memory 192 or the storage 193.

The robot control program may be provided after being fixedly recorded in a non-transitory recording medium such as a CD-ROM, a DVD-ROM, or a semiconductor memory. Alternatively, the robot control program may be provided as a data signal superimposed on a carrier wave through a communication network.

In an example, the robot control program includes a workpiece management program that at least realizes a function of determining and outputting a picking order of a group. The workpiece management program may be provided independently. In an example, a workpiece management system is realized by the workpiece management program.

### [Operation of System]

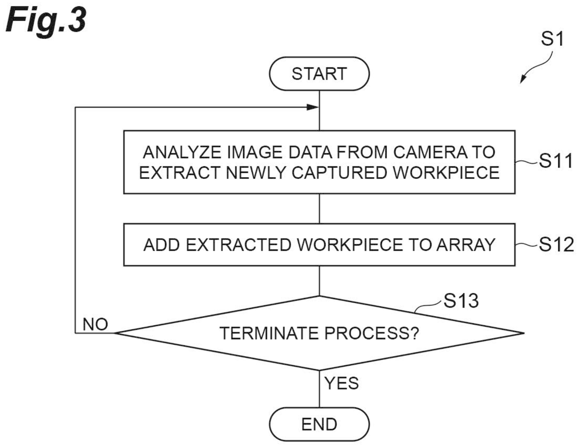

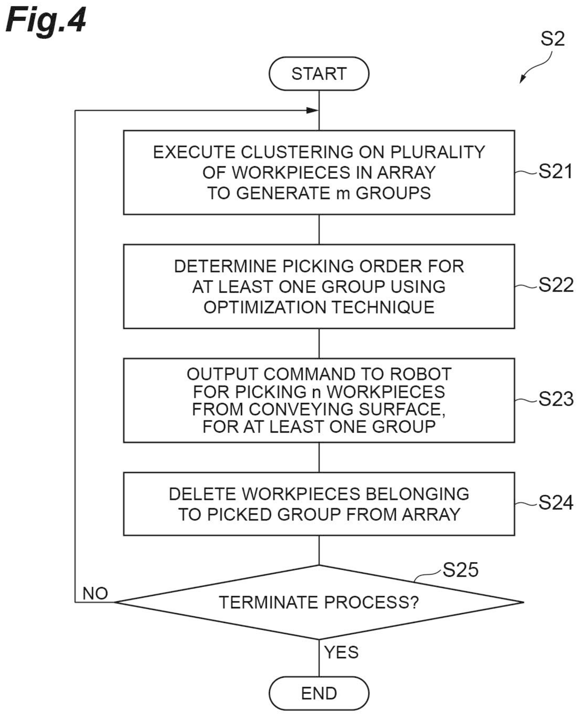

As an example of a robot control method according to the present disclosure, an example of a processing procedure executed by the robot controller 10 will be described with reference to FIGS. 3 and 4. FIG. 3 is a flowchart showing an example of a process for adding a workpiece to an array as a processing flow S1. FIG. 4 is a flowchart showing an example of a process for picking a workpiece from the conveying surface as a processing flow S2. The robot controller 10 executes the processing flow S1 with respect to adding a workpiece to the array and executes the processing flow S2 with respect to picking a workpiece from the conveying surface.

### (Addition of Workpiece to Array)

An example of a process for adding a workpiece to the array will be described with reference to FIG. 3. In an example, the robot controller 10 initiates the processing flow S1 in response to receiving a predetermined request from a user or a host controller.

**In** step S11, the image processing unit 11 receives image data from the camera 4 and analyzes the image data to extract a newly captured workpiece 90. For example, the image processing unit 11 executes object detection on the image data to extract the workpiece 90 and calculates a position of the extracted workpiece 90 on the conveying surface. The position may be represented by, for example, an X coordinate and a Y coordinate, may be represented by an X coordinate, a Y coordinate, and a Z coordinate, or may further include rotation about a Z axis. The "newly captured workpiece" refers to a workpiece that has moved along the conveying surface and entered an imaging range of the camera 4. In a single step S11, the image processing unit 11 may extract a plurality of new workpieces 90.

In step S12, the array setting unit 12 adds the extracted workpiece 90 to the array. For example, the array setting unit 12 records a combination of a workpiece ID, which is an identifier that uniquely identifies the workpiece 90, and a position of the workpiece 90 on the conveying surface in the array, as the addition of the workpiece 90 to the array. In an example, the array setting unit 12 adds the extracted one or more workpieces 90 to the array in an order in which the one or more workpieces 90 are captured by the camera 4, that is, in an order in which the one or more workpieces 90 have moved along the conveying surface (inflow order). The "order in which workpieces are captured by the camera" is an example of an order in which workpieces are detected by a sensor.

As shown in step S13, steps S11 and S12 are repeatedly executed while the robot system 1 executes a pick-and-place operation (picking process).

### (Picking of Workpiece)

An example of a process for picking a workpiece from the conveying surface will be described with reference to FIG. 4. In an example, the robot controller 10 initiates the processing flow S2 in response to receiving a predetermined request from a user or a host controller.

In step S21, the grouping unit 13 executes clustering on a plurality of workpieces 90 in the array, that is, a plurality of workpieces 90 moving along the conveying surface of the conveyor 6, to generate m groups each consisting of n workpieces. In an example, the grouping unit 13 executes clustering based on a position of each of the plurality of workpieces 90 on the conveying surface to generate m groups from the plurality of workpieces 90. The grouping unit 13 may use a k-means method as a clustering technique.

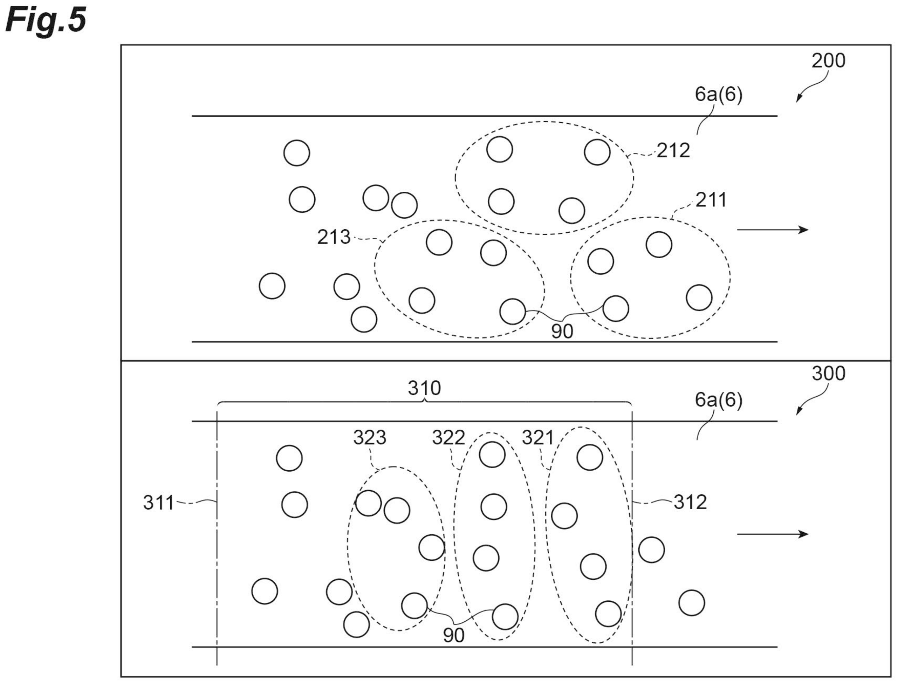

FIG. 5 is a diagram showing an example of grouping of the workpieces 90. In both of two examples 200 and 300, a plurality of workpieces 90 are moving from left to right on a conveying surface 6a of the conveyor 6. As described above with respect to the conveyor 6, the grouping unit 13 generates m groups from the plurality of workpieces 90 moving along the conveying surface in a state of being randomly arranged in at least one of the moving direction and the width direction. In both of the examples 200 and 300, it is assumed that n = 4 and m = 3. The example 200 is a case where a pickable range is not set, and the example 300 is a case where a pickable range is set.

In the example 200, the grouping unit 13 identifies 12 (= 3 × 4) workpieces 90 in order from the plurality of workpieces 90 in the array according to the inflow order and generates three groups 211 to 213 by clustering based on a position of each of the 12 workpieces 90.

In the example 300, the robot 2 may pick the workpieces 90 located within a pickable range 310 from an upstream end 311 to a downstream end 312. For example, the grouping unit 13 identifies 12 (= 3 × 4) workpieces in order from the downstream side (downstream end 312) of the pickable range and generates three groups 321 to 323 by clustering based on a position of each of the 12 workpieces 90.

Returning to FIG. 4, in step S22, the order determination unit 14 determines a picking order for at least one group among the generated m groups using an optimization technique.

In a case where m = 1, the order determination unit 14 determines a picking order for the single generated group.

In a case where m > 1, the order determination unit 14 may determine a picking order for each of the m groups. Alternatively, the order determination unit 14 may determine a picking order for some of the m groups. For example, the order determination unit 14 may determine a picking order for at least a group located most downstream on the conveying surface among the m groups. Hereinafter, the group located most downstream on the conveying surface is also simply referred to as a "most downstream group".

In an example, the order determination unit 14 uses, for the at least one group, an optimization technique that optimizes a path from a start position of the picking process for the group, sequentially passing through the n workpieces 90 belonging to the group, to an end position of the picking process. The start position of the picking process may be a placement position in the placement area 7 or a predetermined initial position different from the placement position. In a case where a plurality of placement positions are set in the placement area 7, the start position of the picking process may be a previous placement position. The end position of the picking process corresponds to the placement position. The order determination unit 14 then determines the picking order for the group according to the optimized path. For example, the order determination unit 14 solves a traveling salesman problem in which each workpiece 90 is regarded as a city using the optimization technique to calculate a path with the lowest movement cost. The order determination unit 14 calculates a physical quantity related to an operation of the robot 2 as the movement cost. The physical quantity may be a travel distance of the robot 2, a travel time of the robot 2, or an energy consumption (for example, electric power consumption) associated with movement of the robot 2. The order determination unit 14 determines an order of passing through the workpieces 90 in the optimized path as the picking order.

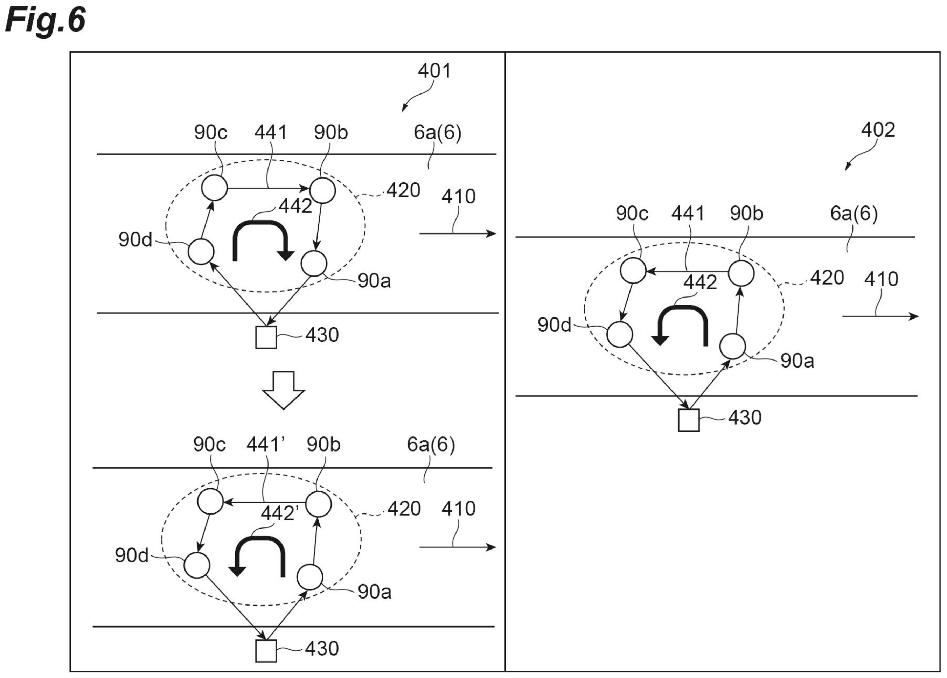

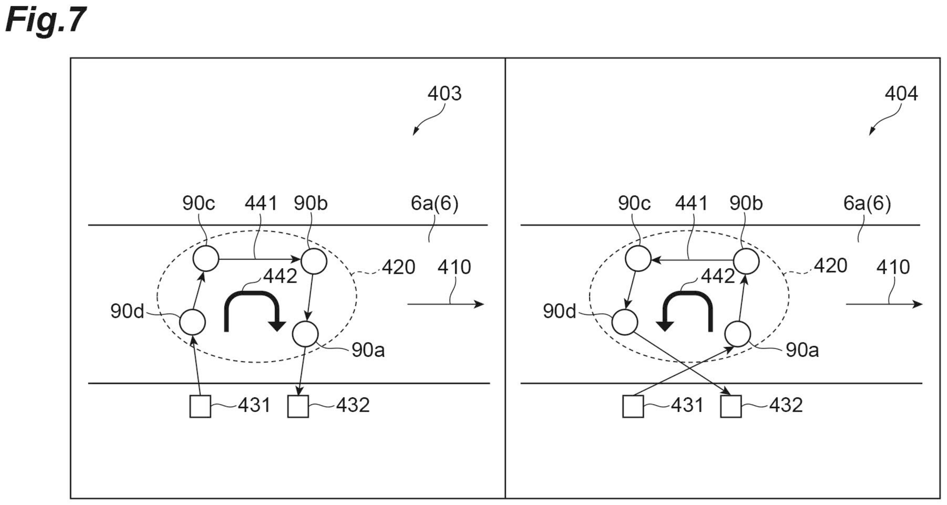

The order determination unit 14 may adjust the optimized path and determine the picking order according to the adjusted path. This processing will be described with reference to FIGS. 6 and 7.

FIG. 6 is a diagram showing an example of determining a picking order in a case where a start position and an end position of the picking process are the same. FIG. 6 shows two scenes 401 and 402. In both of the scenes 401 and 402, the conveying surface 6a of the conveyor 6 moves from left to right, and FIG. 6 shows this movement as a moving direction 410. The order determination unit 14 executes the optimization technique on a group 420 consisting of four workpieces 90a, 90b, 90c, and 90d to calculate an optimized path 441.

In the scene 401, the optimized path 441 starts from a start/end position 430, passes through the workpieces 90d, 90c, 90b, and 90a in this order, and returns to the start/end position 430. A circulation direction 442 indicated by the path 441 is the same as the moving direction 410. In this case, the order determination unit 14 reverses the circulation direction 442 and determines the picking order along the reversed circulation direction 442'. That is, the order determination unit 14 reverses a traveling direction of the path 441 to generate a path 441' and determines a picking order of {workpiece 90a -> workpiece 90b -> workpiece 90c -> workpiece 90d} along this path 441'.

In the scene 402, the optimized path 441 starts from the start/end position 430, passes through the workpieces 90a, 90b, 90c, and 90d in this order, and returns to the start/end position 430. The circulation direction 442 indicated by the path 441 is opposite to the moving direction 410. In this case, the order determination unit 14 determines the picking order along the circulation direction 442 (path 441) without changing the circulation direction 442, that is, without changing the traveling direction of the path 441. That is, the order determination unit 14 determines a picking order of {workpiece 90a -> workpiece 90b -> workpiece 90c -> workpiece 90d}.

In a case where the optimized path 441 passes through a workpiece on an upstream side of the conveying surface 6a and then passes through a workpiece on a downstream side of the conveying surface 6a, the circulation direction 442 is the same as the moving direction 410. On the other hand, in a case where the optimized path 441 passes through a workpiece on the downstream side of the conveying surface 6a and then passes through a workpiece on the upstream side of the conveying surface 6a, the circulation direction 442 is opposite to the moving direction 410. In an example, the order determination unit 14 determines whether the circulation direction 442 is the same as the moving direction 410 based on such a relationship between the optimized path 441 and a position of each workpiece to be passed through.

FIG. 7 is a diagram showing an example of determining a picking order in a case where a start position and an end position of the picking process are different from each other. FIG. 7 shows two scenes 403 and 404. In both of the scenes 403 and 404, the conveying surface 6a of the conveyor 6 moves from left to right, and FIG. 7 shows this movement as a moving direction 410. The order determination unit 14 executes the optimization technique on a group 420 consisting of four workpieces 90a, 90b, 90c, and 90d to calculate an optimized path 441.

In the scene 403, the optimized path 441 starts from a start position 431, passes through the workpieces 90d, 90c, 90b, and 90a in this order, and reaches an end position 432. A circulation direction 442 indicated by the path 441 is the same as the moving direction 410. In the scene 404, the optimized path 441 starts from the start position 431, passes through the workpieces 90a, 90b, 90c, and 90d in this order, and reaches the end position 432. The circulation direction 442 indicated by the path 441 is opposite to the moving direction 410. In a case where the start position and the end position of the picking process are different from each other as in these examples, the order determination unit 14 determines the picking order along the circulation direction 442 (path 441) without changing the circulation direction 442, that is, without changing the traveling direction of the path 441. That is, the order determination unit 14 determines a picking order of {workpiece 90d -> workpiece 90c -> workpiece 90b -> workpiece 90a} in the scene 403 and determines a picking order of {workpiece 90a -> workpiece 90b -> workpiece 90c -> workpiece 90d} in the scene 404.

In a case where the start position and the end position of the picking process are the same, even if the circulation direction 442 is changed, the movement cost (for example, travel distance, travel time, or energy consumption) in the optimized path 441 does not change. By reversing the circulation direction 442 in a case where the circulation direction 442 is the same as the moving direction 410, the workpieces 90 on the upstream side (for example, workpieces 90c and 90d) approach the robot 2 while the robot 2 processes the workpieces 90 on the downstream side (for example, workpieces 90a and 90b). The robot 2 may access the workpieces 90 on the upstream side earlier by that amount. Therefore, such reversal of the circulation direction may contribute to more efficient picking of workpieces. On the other hand, in a case where the start position and the end position of the picking process are different from each other, if the circulation direction 442 is changed, the optimized path 441 itself changes. That is, the movement cost in the path 441 changes. Therefore, in that case, the order determination unit 14 does not change the circulation direction 442.

In a case where m > 1 and a picking order has been determined for each of the m groups, the order determination unit 14 may determine a group order that is an order for processing the m groups based on the picking order of each of the m groups. For example, the order determination unit 14 estimates, for each of the m groups, a physical quantity (movement cost) related to picking of the n workpieces constituting the group. This physical quantity may be a travel distance of the robot 2, a travel time of the robot 2, or an energy consumption associated with movement of the robot 2. The order determination unit 14 executes dynamic programming based on the physical quantity of each of the m groups to determine the group order. For example, the order determination unit 14 determines a group order in which a total physical quantity for picking the m groups from the conveying surface is minimized. The total physical quantity depends on the physical quantity of each group, and the physical quantity of each group depends on the picking order. Therefore, it may be said that the determination of the group order is based on the picking order of each of the m groups. The physical quantity depending on the picking order may also be said to be the movement cost in the optimized path (or the reversed path).

Returning to FIG. 4, in step S23, the robot control unit 15 outputs, for at least one group, a command to the robot 2 for successively picking the n workpieces 90 belonging to the group from the conveying surface.

In an example, the robot control unit 15 generates, for the at least one group, a path for successively picking the n workpieces 90 belonging to the group from the conveying surface according to the picking order and thereafter placing the n workpieces 90 at a predetermined placement position in the placement area 7. In a case where a plurality of placement positions are set in the placement area 7, the robot control unit 15 generates a path for placing the picked n workpieces 90 one by one in order according to a predetermined place order that is an order of the placement positions. The path indicates a trajectory of the robot 2, for example, a trajectory of the end effector 2a. In an example, the robot control unit 15 generates the path such that the robot 2 does not interfere with an obstacle. The interference refers to a phenomenon in which a certain object contacts or collides with another object. It should be noted that in a case where the robot 2 is about to process a certain workpiece 90, contact between the robot 2 and that workpiece 90 is not the interference.

The robot control unit 15 generates a series of control signals indicating the generated path as a command and sequentially outputs the control signals to the motor control device 3. The motor control device 3 sequentially generates electric power for moving the motor based on the control signals and sequentially supplies the electric power to the motor. As a result, the robot 2 successively picks the n workpieces 90 belonging to the group to be processed from the conveying surface of the conveyor 6 in the determined picking order and thereafter places the n workpieces 90 in the placement area 7. As described above, the robot 2 may place the n workpieces 90 at two or more placement positions in order according to the place order.

In this manner, the robot control unit 15 controls the picking process of the robot 2 so as to, for at least one group, successively pick the n workpieces 90 belonging to the group from the conveying surface according to the picking order and thereafter place the n workpieces 90 at a predetermined placement position.

In a case where m = 1, the robot control unit 15 causes the robot 2 to execute the picking process for the single generated group.

In a case where m > 1 and the order determination unit 14 has determined a picking order for at least the most downstream group among the m groups, the robot control unit 15 causes the robot 2 to execute the picking process for at least the most downstream group.

In a case where m > 1 and the order determination unit 14 has determined a picking order for each of the m groups, the robot control unit 15 may cause the robot 2 to execute the picking process for one or more groups other than the most downstream group. The robot control unit 15 selects one or more groups other than the most downstream group based on the optimized path of each of the m groups. For example, the robot control unit 15 selects one or more groups in ascending order of the movement cost in the optimized path. The robot control unit 15 then causes the robot 2 to execute the picking process for the selected one or more groups without causing the robot 2 to execute the picking process for the most downstream group. For example, the robot control unit 15 causes the robot 2 to execute the picking process for the selected one or more groups in ascending order of the movement cost.

In a case where m > 1 and the order determination unit 14 has determined the group order, the robot control unit 15 may cause the robot 2 to execute the picking process for k groups (where m > k) among the m groups based on the group order. Alternatively, the robot control unit 15 may cause the robot 2 to execute the picking process for all of the m groups based on the group order.

In step S24, the array setting unit 12 deletes, from the array, the workpieces 90 belonging to the group picked from the conveying surface.

As shown in step S25, the iteration control unit 16 causes other functional modules to repeatedly execute the processing of steps S21 to S24 each time at least one group is picked from the conveying surface by the robot 2, thereby causing the robot 2 to repeatedly execute the picking process (multi-picking). The iteration control unit 16 executes the repetition until a predetermined termination condition is satisfied. The termination condition may be that a predetermined number of workpieces 90 have been picked or that all workpieces 90 have been picked from the conveyor 6.

In the repeated step S21, the grouping unit 13 executes clustering on a plurality of new workpieces 90 in the array (that is, a plurality of new workpieces 90 moving along the conveying surface) to newly generate m groups each consisting of n workpieces. In the repeated step S22, the order determination unit 14 determines a picking order for at least one new group among the m new groups using the optimization technique. In the repeated step S23, the robot control unit 15 controls the picking process of the robot 2 so as to pick the at least one new group from the conveying surface. In the repeated step S24, the array setting unit 12 deletes the workpieces 90 belonging to the new group picked from the conveying surface from the array.

In a case where the robot control unit 15 causes the robot 2 to execute the picking process for k groups (where m > k) among the m groups, the iteration control unit 16 causes other functional modules to repeat the processing as follows each time the picking process is completed.

In the repeated step S21, the grouping unit 13 newly generates m groups each consisting of n workpieces from a plurality of new workpieces 90 in the array (that is, a plurality of new workpieces 90 moving along the conveying surface) including the workpieces 90 belonging to the (m - k) groups.

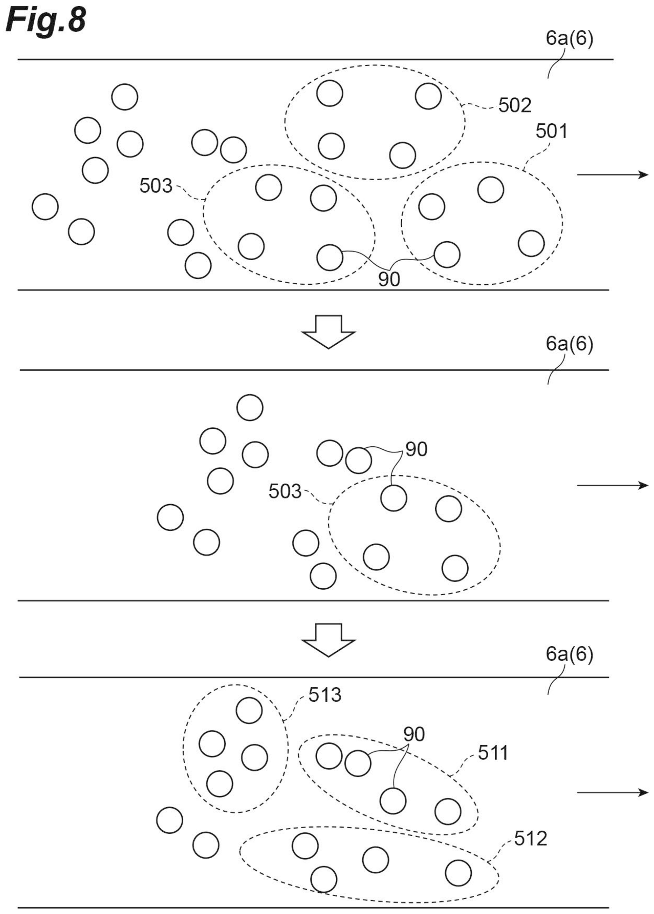

FIG. 8 is a diagram showing an example of a process for newly generating m groups. In this example, it is assumed that n = 4, m = 3, and k = 2. In a previous loop process, the grouping unit 13 generates three groups 501 to 503. The order determination unit 14 determines a picking order for each of these three groups and determines a group order of {group 501 -> group 502 -> group 503} based on each picking order. The robot control unit 15 causes the robot 2 to execute the picking process for the groups 501 and 502 based on the group order. The array setting unit 12 deletes the workpieces 90 belonging to the groups 501 and 502 from the array. On the premise of the above series of processing, the grouping unit 13 newly generates three groups 511 to 513 from a plurality of new workpieces 90 in the array including the workpieces 90 belonging to the group 503. In this example, the four workpieces 90 that belonged to the group 503 are divided into two workpieces 90 belonging to the group 511 and two workpieces 90 belonging to the group 512. However, depending on the arrangement of the workpieces 90, a group generated in the previous loop process may be generated again.

In the repeated step S22, the order determination unit 14 determines a picking order for each of the m new groups using the optimization technique. The order determination unit 14 then determines a new group order based on the picking order of each of the new m groups. In the repeated step S23, the robot control unit 15 causes the robot 2 to execute the picking process for k groups among the newly generated m groups based on the new group order. In the example of FIG. 8, the order determination unit 14 determines a picking order for each of the groups 511 to 513, and the robot control unit 15 causes the robot 2 to execute the picking process for two groups among the three groups.

### [Modifications]

Various examples of the technology according to the present disclosure have been described in detail above. However, the present disclosure is not limited to the above examples. Various modifications are possible for the technology according to the present disclosure without departing from the gist thereof.

At least part of the functional modules related to the robot system, the robot control system, or the workpiece management system may be implemented in another device such as the motor control device. For example, a functional module corresponding to the robot control unit 15 may be implemented in the motor control device, and a workpiece management system that outputs the picking order to the motor control device may be provided. The workpiece management system includes a grouping unit, an order determination unit, and an output unit. The grouping unit generates m groups (where m ≥ 1) each consisting of n workpieces (where n > 1) from a plurality of workpieces moving along the conveying surface. The order determination unit determines, for at least one group among the m groups, a picking order that is an order for picking the n workpieces belonging to the group by a robot, using an optimization technique. The output unit outputs the picking order for the at least one group. For example, the output unit outputs the picking order to a robot control unit provided outside the workpiece management system. The order determination unit may further determine the group order, and the output unit may further output the group order.

The robot system may manage information about workpieces on the conveying surface by a technique other than the array. In this regard, the robot system, the robot control system, or the workpiece management system may not include the array setting unit.

The robot system may not include the iteration control unit. That is, the robot system may terminate the processing flow S2 after executing steps S21 to S23 once.

The robot system may not include the range setting unit. That is, the robot system may generate the m groups without setting the pickable range.

The robot system, the robot control system, or the workpiece management system according to the present disclosure may be used to cause a robot to be controlled to pick a workpiece that another robot located on an upstream side of the conveying surface has failed to pick. As an example, a robot system is assumed in which each of two or more robots arranged along the moving direction of the conveying surface executes multi-picking on workpieces pre-assigned to the robot. In this robot system, it is assumed that a first robot located on an upstream side of the conveying surface has failed to pick an assigned workpiece. In this case, the robot system (or the robot control system or the workpiece management system) may control multi-picking of a second robot located downstream of the first robot by processing similar to that of the above robot system 1 (robot controller 10) so that the second robot successively picks two or more workpieces including that workpiece from the conveying surface.

The hardware configuration of the system is not limited to an aspect in which each functional module is realized by execution of a program. For example, at least part of the above-described functional module group may be configured by a logic circuit specialized for the function or may be configured by an application specific integrated circuit (ASIC) in which the logic circuit is integrated.

The processing procedure of the method executed by at least one processor is not limited to the above examples. For example, some of the above-described steps or processes may be omitted, or each step may be executed in a different order. Further, any two or more of the above-described steps may be combined, or part of the steps may be modified or deleted. Alternatively, other steps may be executed in addition to the above-described steps.

In a case of comparing the magnitude relationship between two numerical values in a computer system or a computer, either of two criteria of "equal to or greater than" and "greater than" may be used, and either of two criteria of "equal to or less than" and "less than" may be used.

### [Appendices]

As understood from the above various examples, the present disclosure includes the following aspects.

### (appendix 1)

A robot system comprising:
a robot configured to execute a picking process for successively picking two or more workpieces moving along a conveying surface;
a grouping unit configured to generate m groups (where m ≥ 1) each consisting of n workpieces (where n > 1) from a plurality of workpieces moving along the conveying surface;
an order determination unit configured to determine, for at least one group among the m groups, a picking order that is an order for picking the n workpieces belonging to the group, using an optimization technique; and
a robot control unit configured to control the picking process of the robot so as to successively pick the n workpieces belonging to the group from the conveying surface according to the picking order and thereafter place the n workpieces at a predetermined placement position, for the at least one group.

According to appendix 1, grouping is executed on a plurality of workpieces on the conveying surface. A picking order is determined by an optimization technique for at least one group, and the picking process (multi-picking) is executed for the at least one group according to the picking order. In this manner, since a plurality of workpieces to be subjected to multi-picking and an order for picking the plurality of workpieces (picking order) are automatically determined, multi-picking may be efficiently executed.

### (appendix 2)

The robot system according to appendix 1, wherein the grouping unit is configured to execute clustering based on a position of each of the plurality of workpieces on the conveying surface to generate the m groups from the plurality of workpieces.

According to appendix 2, since workpieces are grouped by clustering based on a position of each workpiece on the conveying surface, a group of workpieces for which efficient multi-picking may be expected may be accurately generated.

### (appendix 3)

The robot system according to appendix 1 or 2, wherein the order determination unit is configured to determine the picking order for the group using the optimization technique that optimizes a path from a start position of the picking process for the group, sequentially passing through the n workpieces belonging to the group, to an end position of the picking process for the group, for the at least one group. According to appendix 3, since the picking order is determined so as to optimize a path of the robot in the picking process (multi-picking), multi-picking may be executed more efficiently.

### (appendix 4)

The robot system according to appendix 3, wherein the end position is the same as the start position, and
wherein the order determination unit is configured to reverse a circulation direction indicated by the optimized path and determine the picking order along the reversed circulation direction, in a case where the circulation direction is the same as a moving direction that is a direction in which the conveying surface moves.

According to appendix 4, the circulation direction that is the same as the moving direction is reversed, and the picking order is determined along the reversed circulation direction. By this determination, in the picking process, workpieces on the upstream side approach the robot while the robot processes workpieces on the downstream side. Since the robot may access the workpieces on the upstream side earlier by that amount, more efficient multi-picking becomes possible.

### (appendix 5)

The robot system according to appendix 3 or 4, wherein m > 1, and
wherein the robot control unit is configured to cause the robot to execute the picking process for one or more other groups among the m groups without causing the robot to execute the picking process for a group located most downstream on the conveying surface among the m groups, based on the optimized path of each of the m groups.

According to appendix 5, by intentionally excluding the group located most downstream among the m groups, another group for which the picking process is expected to be reliably completed may be processed by the robot.

### (appendix 6)

The robot system according to any one of appendices 1 to 4, wherein m > 1,
wherein the order determination unit is configured to determine the picking order by the optimization technique for at least a group located most downstream on the conveying surface among the m groups, and
wherein the robot control unit is configured to cause the robot to execute the picking process for at least the group located most downstream.

According to appendix 6, since at least the group located most downstream among the m groups is processed, failure to pick workpieces may be prevented or suppressed.

### (appendix 7)

The robot system according to any one of appendices 1 to 4, wherein m > 1,
wherein the order determination unit is configured to:
   determine the picking order for each of the m groups using the optimization technique; and
   determine a group order that is an order for processing the m groups based on the picking order of each of the m groups, and
wherein the robot control unit is configured to cause the robot to execute the picking process for k groups (where m > k) among the m groups based on the group order.

According to appendix 7, part of the generated plurality of groups is picked from the conveying surface. Picking all of the m groups generated at a certain point in time may only result in finding a local solution. By intentionally leaving some groups, it becomes possible to execute grouping of workpieces again based on a set of workpieces belonging to the remaining groups and new workpieces. As a result, multi-picking may be efficiently executed by considering a plurality of workpieces on the conveying surface more comprehensively.

### (appendix 8)

The robot system according to appendix 7, further comprising an iteration control unit configured to cause the robot to repeatedly execute the picking process,
wherein the iteration control unit is configured to, each time the picking process for the k groups by the robot is completed:
cause the grouping unit to newly generate m groups each consisting of n workpieces from a plurality of new workpieces moving along the conveying surface including the workpieces belonging to (m - k) groups;
cause the order determination unit to determine the picking order for each of the newly generated m groups using the optimization technique and determine a new group order based on the picking order of each of the newly generated m groups; and
cause the robot control unit to control the picking process of the robot for k groups among the newly generated m groups based on the new group order.

According to appendix 8, a series of processing from grouping of workpieces to picking of workpieces is repeatedly executed according to a situation of a plurality of workpieces moving along the conveying surface. Therefore, workpieces that move one after another may be efficiently picked by multi-picking. Picking all of the m groups generated at a certain point in time may only result in finding a local solution. By intentionally leaving some groups and executing grouping of workpieces again based on a set of workpieces belonging to the remaining groups and new workpieces, multi-picking may be efficiently executed by considering a plurality of workpieces on the conveying surface more comprehensively. For example, a certain workpiece remaining on the conveying surface may belong to a group different from the previous group. By changing the group in this manner, there is a possibility that multi-picking is executed more efficiently.

### (appendix 9)

The robot system according to any one of appendices 1 to 8, further comprising a range setting unit configured to set a pickable range of the robot on the conveying surface,
wherein the grouping unit is configured to:
identify m × n workpieces in order from a downstream side of the pickable range; and
generate the m groups from the m × n workpieces. According to appendix 9, grouping of workpieces is executed in consideration of a range in which the robot is able to pick workpieces (pickable range). By this mechanism, multi-picking may be efficiently executed while preventing or suppressing failure to pick workpieces. Further, it becomes possible to realize robot control in which the robot appears to be operating with a margin, that is, an operation of the robot that does not cause a user to feel uneasy.

### (appendix 10)

The robot system according to any one of appendices 1 to 9, wherein the conveying surface has a moving direction that is a direction in which the two or more workpieces move and a width direction orthogonal to the moving direction, and
wherein the grouping unit is configured to generate the m groups from the plurality of workpieces moving along the conveying surface in a state of being randomly arranged in at least one of the moving direction and the width direction.

According to appendix 10, multi-picking may be efficiently executed in an environment in which a plurality of workpieces move randomly along the conveying surface.

### (appendix 11)

A workpiece management system for a picking process for successively picking two or more workpieces moving along a conveying surface, the workpiece management system comprising:
a grouping unit configured to generate m groups (where m ≥ 1) each consisting of n workpieces (where n > 1) from a plurality of workpieces moving along the conveying surface;
an order determination unit configured to determine, for at least one group among the m groups, a picking order that is an order for picking the n workpieces belonging to the group by a robot, using an optimization technique; and
an output unit configured to output the picking order for the at least one group.

According to appendix 11, the same technical effect as appendix 1 may be obtained.

### (appendix 12)

A robot control method executed by a robot control system including at least one processor configured to control a robot that executes a picking process for successively picking two or more workpieces moving along a conveying surface, the robot control method comprising:
generating m groups (where m ≥ 1) each consisting of n workpieces (where n > 1) from a plurality of workpieces moving along the conveying surface;
determining, for at least one group among the m groups, a picking order that is an order for picking the n workpieces belonging to the group, using an optimization technique; and
controlling, for the at least one group, the picking process of the robot so as to successively pick the n workpieces belonging to the group from the conveying surface according to the picking order and thereafter place the n workpieces at a predetermined placement position.

According to appendix 12, the same technical effect as appendix 1 may be obtained.

### (appendix 13)

A workpiece management program that causes a computer to function as a workpiece management system for a picking process for successively picking two or more workpieces moving along a conveying surface, the workpiece management program causing the computer to execute:
generating m groups (where m ≥ 1) each consisting of n workpieces (where n > 1) from a plurality of workpieces moving along the conveying surface;
determining, for at least one group among the m groups, a picking order that is an order for picking the n workpieces belonging to the group by a robot, using an optimization technique; and
outputting the picking order for the at least one group.

According to appendix 13, the same technical effect as appendix 1 may be obtained.

## Claims

1. A robot system (1) comprising:
a robot (2) configured to execute a picking process for successively picking two or more workpieces (90) moving along a conveying surface (6a);
a grouping unit (13) configured to generate m groups (where m ≥ 1) each consisting of n workpieces (90) (where n > 1) from a plurality of workpieces (90) moving along the conveying surface (6a);
an order determination unit (14) configured to determine, for at least one group among the m groups, a picking order that is an order for picking the n workpieces (90) belonging to the group, using an optimization technique; and
a robot control unit (15) configured to control the picking process of the robot (2) so as to successively pick the n workpieces (90) belonging to the group from the conveying surface (6a) according to the picking order and thereafter place the n workpieces (90) at a predetermined placement position, for the at least one group.

2. The robot system (1) according to claim 1, wherein the grouping unit (13) is configured to execute clustering based on a position of each of the plurality of workpieces (90) on the conveying surface (6a) to generate the m groups from the plurality of workpieces (90).

3. The robot system (1) according to claim 1 or 2, wherein the order determination unit (14) is configured to determine the picking order for the group using the optimization technique that optimizes a path from a start position of the picking process for the group, sequentially passing through the n workpieces (90) belonging to the group, to an end position of the picking process for the group, for the at least one group.

4. The robot system (1) according to claim 3, wherein the end position is the same as the start position, and
wherein the order determination unit (14) is configured to reverse a circulation direction indicated by the optimized path and determine the picking order along the reversed circulation direction, in a case where the circulation direction is the same as a moving direction that is a direction in which the conveying surface (6a) moves.

5. The robot system (1) according to claim 3 or 4, wherein m > 1, and
wherein the robot control unit (15) is configured to cause the robot (2) to execute the picking process for one or more other groups among the m groups without causing the robot (2) to execute the picking process for a group located most downstream on the conveying surface (6a) among the m groups, based on the optimized path of each of the m groups.

6. The robot system (1) according to any one of claims 1 to 4, wherein m > 1,
wherein the order determination unit (14) is configured to determine the picking order by the optimization technique for at least a group located most downstream on the conveying surface (6a) among the m groups, and
wherein the robot control unit (15) is configured to cause the robot (2) to execute the picking process for at least the group located most downstream.

7. The robot system (1) according to any one of claims 1 to 4, wherein m > 1,
wherein the order determination unit (14) is configured to:
determine the picking order for each of the m groups using the optimization technique; and
determine a group order that is an order for processing the m groups based on the picking order of each of the m groups, and
wherein the robot control unit (15) is configured to cause the robot (2) to execute the picking process for k groups (where m > k) among the m groups based on the group order.

8. The robot system (1) according to claim 7, further comprising an iteration control unit (16) configured to cause the robot (2) to repeatedly execute the picking process,
wherein the iteration control unit (16) is configured to, each time the picking process for the k groups by the robot (2) is completed:
cause the grouping unit (13) to newly generate m groups each consisting of n workpieces (90) from a plurality of new workpieces (90) moving along the conveying surface (6a) including the workpieces (90) belonging to (m - k) groups;
cause the order determination unit (14) to determine the picking order for each of the newly generated m groups using the optimization technique and determine a new group order based on the picking order of each of the newly generated m groups; and
cause the robot control unit (15) to control the picking process of the robot (2) for k groups among the newly generated m groups based on the new group order.

9. The robot system (1) according to any one of claims 1 to 8, further comprising a range setting unit (17) configured to set a pickable range (310) of the robot (2) on the conveying surface (6a),
wherein the grouping unit (13) is configured to:
identify m × n workpieces (90) in order from a downstream side of the pickable range (310); and
generate the m groups from the m × n workpieces (90).

10. The robot system (1) according to any one of claims 1 to 9, wherein the conveying surface (6a) has a moving direction that is a direction in which the two or more workpieces (90) move and a width direction orthogonal to the moving direction, and
wherein the grouping unit (13) is configured to generate the m groups from the plurality of workpieces (90) moving along the conveying surface (6a) in a state of being randomly arranged in at least one of the moving direction and the width direction.

11. A workpiece management system (10) for a picking process for successively picking two or more workpieces (90) moving along a conveying surface (6a), the workpiece management system comprising:
a grouping unit (13) configured to generate m groups (where m ≥ 1) each consisting of n workpieces (90) (where n > 1) from a plurality of workpieces (90) moving along the conveying surface (6a);
an order determination unit (14) configured to determine, for at least one group among the m groups, a picking order that is an order for picking the n workpieces (90) belonging to the group by a robot (2), using an optimization technique; and
an output unit configured to output the picking order for the at least one group.

12. A robot control method executed by a robot control system (10) including at least one processor (191) configured to control a robot (2) that executes a picking process for successively picking two or more workpieces (90) moving along a conveying surface (6a), the robot control method comprising:
generating m groups (where m ≥ 1) each consisting of n workpieces (90) (where n > 1) from a plurality of workpieces (90) moving along the conveying surface (6a);
determining, for at least one group among the m groups, a picking order that is an order for picking the n workpieces (90) belonging to the group, using an optimization technique; and
controlling the picking process of the robot (2) so as to successively pick the n workpieces (90) belonging to the group from the conveying surface (6a) according to the picking order and thereafter place the n workpieces (90) at a predetermined placement position, for the at least one group.

13. A workpiece management program that causes a computer to function as a workpiece management system (10) for a picking process for successively picking two or more workpieces (90) moving along a conveying surface, the workpiece management program causing the computer to execute:
generating m groups (where m ≥ 1) each consisting of n workpieces (90) (where n > 1) from a plurality of workpieces (90) moving along the conveying surface (6a);
determining, for at least one group among the m groups, a picking order that is an order for picking the n workpieces (90) belonging to the group by a robot (2), using an optimization technique; and
outputting the picking order for the at least one group.
